# FASCICULE DE BREVET EUROPEEN

(11) **EP 0 963 260 B1**
(45) Date de publication et mention de la délivrance du brevet: **12.09.2001**
(21) Numéro de dépôt: 98905462.2
(22) Date de dépôt: 30.01.1998
(51) Int. Cl.: B05D 7/02, D06B 1/02, B05D 5/10

(54) **PROCEDE ET MACHINE D'ENCOLLAGE SUPERFICIEL DE PIECES SOUPLES A SURFACE POREUSE**
VERFAHREN UND VORRICHTUNG ZUR OBERFLÄCHENLEIMUNG VON FLEXIBLEN WERKSTÜCKEN MIT PORÖSER FLÄCHE
METHOD AND DEVICE FOR SURFACE SIZING OF SOFT PIECES WITH POROUS SURFACE

(30) Priorité: 30.01.1997 FR 9701190
(43) Date de publication de la demande: 15.12.1999
(73) Titulaire: Guilhem, Christian, F-82350 Albias (FR); Guilhem, Jacques, 82240 Puylaroque (FR)
(72) Inventeur: Guilhem, Christian, F-82350 Albias (FR); Guilhem, Jacques, 82240 Puylaroque (FR)
(74) Mandataire: Cabinet BARRE LAFORGUE & associés
(86) Numéro de dépôt international: FR9800171
(87) Numéro de publication internationale: WO9833602

(56) Documents cités:
- DE-C- 3 419 867
- US-A- 5 130 173

## Description

L'invention concerne un procédé et une machine d'encollage superficiel de pièces souples à surface poreuse telles que des pièces de tissu, de mousse,... avec une colle à l'eau.

Actuellement, les pièces souples de tissu et/ou de mousse sont encollées soit avec des colles de type "hot melt" soit avec des colles à solvant organique volatil dont la composition peut être aisément choisie pour éviter toute pénétration de la colle dans l'épaisseur des pièces.

En effet, lorsque l'on souhaite encoller une pièce souple à surface poreuse, il est important d'éviter, ou en tous cas de minimiser, la pénétration de la colle dans l'épaisseur de la pièce pour éviter d'une part un effet de cartonnage (c'est-à-dire un durcissement dans l'épaisseur superficielle de la surface affectant ses qualités de souplesse), et d'autre part un gaspillage de colle (seule la colle déposée en surface servant à l'adhésion ultérieure). Tel est, par exemple et en particulier, le cas de l'encollage des housses de sièges et des coussin de siège pour leur assemblage relatif par collage.

Or, les solvants organiques volatils utilisés (acétone, toluène, méthanol,...) sont toxiques et nuisent à l'environnement et à la santé humaine.

On connaît par ailleurs des colles sans solvant organique volatil telles que les colles dites "colles à l'eau". Ces colles à l'eau sont des compositions adhésives formées d'une base d'un ou plusieurs polymère(s) adhésif(s) synthétique(s) ou naturel(s) (polyuréthannes, élastomères, polymères thermoplastiques, acryliques, résines synthétiques,...) dispersés dans de l'eau. Néanmoins, ces colles à l'eau présentent un temps de séchage beaucoup plus long et sont délicates à véhiculer du fait de leur tendance à adhérer aux parois des conduits, à précipiter et à former des bouchons. Elles sont néanmoins fluides et tendent inévitablement à pénétrer dans les pores des surfaces sur lesquelles elles sont appliquées.

Il est à noter que, dans ces colles à l'eau, contrairement aux colles à solvant, la plupart des extraits secs. en proportion beaucoup plus importante (de l'ordre de 50 %), ne sont pas dissous, mais sont en suspension, l'eau n'ayant pour fonction que de liquéfier la composition et de véhiculer les bases adhésives. En conséquence, les techniques utilisées pour l'encollage avec des colles à solvant ne sont pas transposables avec les colles à l'eau.

On connaît par ailleurs des colles à l'eau dites "bi-composant", c'est-à-dire associées à une deuxième composition projetée simultanément et destinée à accélérer la polymérisation de la colle. Néanmoins, cette technique nécessite alors l'utilisation de deux organes d'application (deux buses de pulvérisation) coûteux, ce qui multiplie d'autant le risque de bouchage et les coûts d'investissement et d'utilisation. Cette solution n'est donc pas compatible avec une fabrication industrielle en série. En outre, ladite deuxième composition à base d'ammoniaque ou de sels est odorante, irritante et agressive pour la peau et les voies respiratoires.

D'autre part, on connaît du document DE 3419867 un procédé d'encollage superficiel de pièces souples à surface poreuse (telles que tissu, mousse) dans lequel on préchauffe la surface à encoller de chaque pièce puis on applique la colle sur la surface préchauffée.

Dans tous les cas, l'eau pénètre inévitablement dans les pores, ce qui induit une humidité résiduelle néfaste et indésirable dans la pièce.

L'invention vise donc à pallier ces inconvénients en proposant un procédé et une machine permettant l'encollage superficiel de pièces souples à surface poreuse, telles que des pièces de tissu, de mousse,... avec une colle à l'eau, grâce auxquels la colle -et notamment l'eau qu'elle comprend- ne pénètre pas ou quasiment pas dans l'épaisseur superficielle de la pièce, de sorte que tout effet de cartonnage et toute rétention d'eau sont évités, et ce sans nécessiter l'application simultanée d'une autre composition que la colle elle-même.

L'invention vise aussi à proposer un procédé et une machine pouvant être utilisés avec diverses compositions et natures de colles à l'eau (à bases adhésives diverses. réactivables ou de contact....) tout en évitant tout phénomène de précipitation, colmatage ou bouchage des appareils par la colle à l'eau.

L'invention vise néanmoins aussi à proposer un procédé et une machine plus particulièrement et avantageusement applicables pour l'encollage avec une colle à l'eau à base polyuréthanne et/ou élastomère réactivable à chaud.

Pour ce faire, l'invention concerne un procédé d'encollage superficiel de pièces souples à surface poreuse telles que tissu, mousse.... avec une colle à l'eau caractérisé en ce que :
- on préchauffe la surface à encoller de chaque pièce à une température supérieure à 50 °C.
- puis on projette la colle à l'eau par pulvérisation sous basse pression sur ladite surface préchauffée.

Avantageusement et selon l'invention, on préchauffe ladite surface à une température la plus élevée possible qui n'entraîne pas de détérioration de la pièce, notamment par projection d'air chaud à une température comprise entre 50 °C et 100 °C.

Selon l'invention, à titre d'agent d'adhésion de la colle à l'eau, on peut utiliser de façon générale dans le cadre de l'invention, un ou plusieurs agents parmi les polyuréthannes, les élastomères synthétiques ou naturels, les polymères thermoplastiques acryliques, les résines,..., dès lors que la colle à l'eau est compatible avec la matière constitutive des pièces à assembler et avec les propriétés recherchées.

Avantageusement et selon l'invention, on chauffe la colle à l'eau à une température comprise entre 20 °C et 45 °C avant de la projeter par pulvérisation. On choisit aussi cette température pour éviter tout phénomène de précipitation ou de colmatage.

De même, avantageusement et selon l'invention, on réalise une dispersion de microbulles gazeuses dans la colle à l'eau, notamment par adjonction d'un agent effervescent compatible avec la colle à l'eau, avant de la projeter par pulvérisation.

La colle à l'eau est projetée sous basse pression, c'est-à-dire avec une pression juste suffisante pour permettre sa projection par pulvérisation.

Avantageusement et selon l'invention, on projette la colle à l'eau par pulvérisation sous une pression relative comprise entre 0,2.10⁵Pa et 1.10⁵Pa.

Avantageusement et selon l'invention, on projette la colle à l'eau par pulvérisation par contact avec un jet d'air comprimé à basse pression, notamment comprise entre 0,2.10⁵Pa et 1.10⁵Pa (pression relative).

Par ailleurs, avantageusement et selon l'invention, on projette la colle à l'eau selon une direction formant un angle α non nul avec la direction normale à ladite surface. De préférence, l'angle α est compris entre 30° et 60° -notamment de l'ordre de 45°-. En outre, avantageusement et selon l'invention, on projette la colle à l'eau à l'aide d'une buse de pulvérisation que l'on maintient à une distance comprise entre 5 cm et 50 cm -notamment de l'ordre de 20 cm- de ladite surface.

Avantageusement et selon l'invention, on fait sécher la colle à l'eau par chauffage radiant et/ou extraction d'air immédiatement après la projection de la colle à l'eau.

L'invention concerne aussi une machine pour la mise en oeuvre d'un procédé selon l'invention. L'invention concerne ainsi une machine pour l'encollage superficiel de pièces souples à surface poreuse telles que tissu, mousse,... avec une colle à l'eau, caractérisée en ce qu'elle comprend :
- au moins un poste de projection de colle à l'eau par pulvérisation sous basse pression,
- et, à l'amont de chaque poste de projection, au moins un poste de préchauffage -notamment à l'air chaud- en surface de pièces à une température supérieure à 50 °C.

Avantageusement et selon l'invention le poste de projection comprend des moyens de projection de la colle par pulvérisation sous une pression relative comprise entre 0,2.10⁵ Pa et 1.10⁵ Pa, comportant notamment un pistolet de pulvérisation relié à une conduite d'alimentation en colle sous basse pression et à une conduite d'alimentation en air sous basse pression.

En outre, avantageusement et selon l'invention, la machine comprend des moyens pour maintenir une buse de pulvérisation de la colle orientée selon un angle α non nul par rapport à la direction normale à la surface de la pièce. Avantageusement et selon l'invention, l'angle α est compris entre 30° et 60°, notamment de l'ordre de 45°, et lesdits moyens sont adaptés pour maintenir l'angle α constant. En outre, avantageusement et selon l'invention, la machine comprend des moyens pour maintenir une buse de pulvérisation de la colle à une distance comprise entre 5 cm et 50 cm, notamment de l'ordre de 20 cm de la surface de la pièce. Avantageusement et selon l'invention, ladite distance est constante.

Dans une machine selon l'invention, le poste de projection est adapté pour projeter la colle à l'eau par pulvérisation en un nuage sous basse pression formant sur la surface une couche discontinue, notamment en forme générale de toile d'araignée. Il est à noter à cet égard que le poste de projection de la colle sous basse pression en une couche discontinue sur la surface se distingue d'un poste de projection de peinture à haute pression en couche uniforme sur des pièces mécaniques d'automobiles (radiateurs) tel que décrit dans US-5 130 173.

En outre, avantageusement et selon l'invention, le poste de préchauffage comprend des moyens de projection d'air chaud à une température comprise entre 50° C et 100° C sur la surface.

Par ailleurs, avantageusement et selon l'invention, la machine comprend des moyens de chauffage de la colle à l'eau à une température comprise entre 20° C et 45° C avant son alimentation au poste de projection. Avantageusement et selon l'invention, ces moyens de chauffage comprennent un dispositif de chauffage associé à une conduite d'alimentation en colle d'un pistolet de projection.

Avantageusement et selon l'invention, la machine comprend un convoyeur adapté pour transporter successivement les pièces en regard de chaque poste de la machine, et pour maintenir les pièces en regard de chaque poste pendant une durée prédéterminée. Avantageusement et selon l'invention le convoyeur est adapté pour que le temps de séjour des pièces en regard de chaque poste soit compris entre 10 s et 20 s. En outre, le convoyeur est aussi avantageusement adapté pour que le traitement complet des pièces se fasse en une durée totale inférieure à ou de l'ordre de 2 min.

Avantageusement et selon l'invention, la machine est aussi caractérisée en ce qu'elle comprend un poste d'entrée recevant les pièces à traiter et un poste de sortie auquel les pièces arrivent après traitement, et en ce que le poste d'entrée et le poste de sortie se jouxtent ou sont confondus en un même poste d'entrée/sortie, de façon à pouvoir être gérés par un seul et même manipulateur automatique ou humain.

Les essais démontrent que l'invention permet d'obtenir de façon extrêmement simple un encollage des surfaces poreuses de pièces souples avec une colle à l'eau, de grande qualité et préservant la souplesse des pièces. En particulier, on constate que le simple fait de préchauffer la surface à encoller évite toute pénétration de la colle à l'eau dans l'épaisseur du matériau poreux de la surface. La colle est déposée en une couche discontinue semblable à une toile d'araignée, et non en une couche uniforme.

Il est aussi à noter que le procédé et la machine selon l'invention, non seulement permettent l'encollage superficiel avec la colle à l'eau sans pénétration intempestive dans la surface poreuse, mais en outre sont compatibles avec les impératifs de rentabilité d'une fabrication industrielle en grandes séries, et ce dans le respect de l'environnement et de la santé humaine. notamment non toxique vis-à-vis du personnel chargé de la mise en oeuvre de l'invention. En particulier, l'invention permet l'encollage automatique en une durée totale inférieure à 2 min par pièce, avec une seule buse de pulvérisation, sans bouchage des conduits ou de la buse, et autorise la mise en oeuvre d'une colle à l'eau exempte de solvant toxique.

L'invention est avantageusement applicable pour l'assemblage par collage de pièces de tissu sur des pièces de mousse avec lesquelles les agents d'adhésion des colles à l'eau peuvent être compatibles (par exemple, des housses (même finies et fermées) sur les coussins de sièges).

L'invention concerne aussi un procédé et une machine comprenant en combinaison tout ou partie des caractéristiques mentionnées ci-dessus ou ci-après.

D'autres buts, avantages et caractéristiques de l'invention apparaîtront à la lumière de la description suivante qui se réfère aux figures annexées dans lesquelles :
- la figure 1 est une vue schématique de dessus illustrant un premier mode de réalisation des différents postes d'une machine selon l'invention et des différentes étapes d'un procédé selon l'invention,
- la figure 2 est une vue schématique en coupe verticale d'un mode de réalisation d'une étape et d'un poste de préchauffage de la surface poreuse des pièces souples selon l'invention,
- la figure 3 est une vue schématique agrandie en élévation d'un mode de réalisation d'une étape et d'un poste de projection de la colle à l'eau selon l'invention,
- la figure 4 est une vue schématique en coupe verticale d'un mode de réalisation d'une étape et d'un poste de séchage par chauffage radiant et extraction d'air selon l'invention,
- la figure 5 est une vue schématique en perspective partiellement arrachée, illustrant un deuxième mode de réalisation d'une machine et d'un procédé selon l'invention.

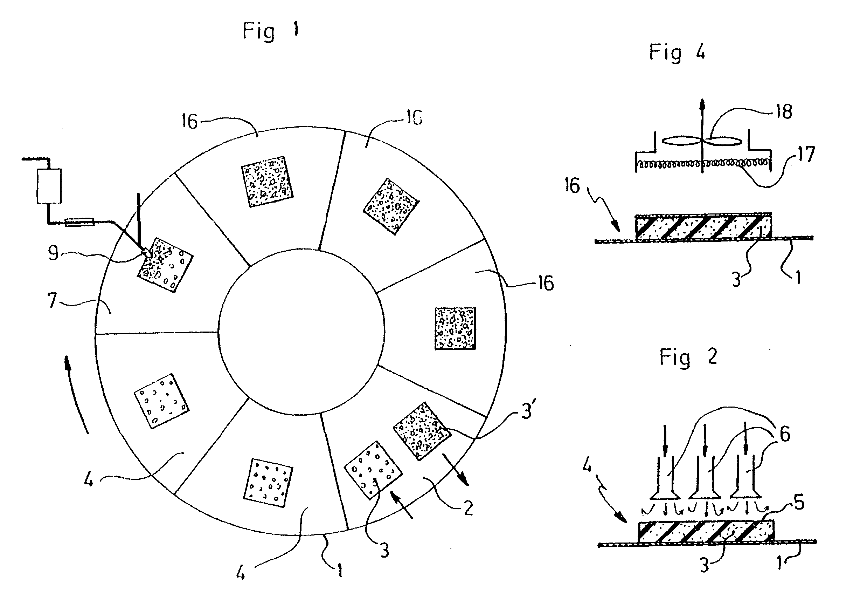

La machine représentée figure 1 comprend un convoyeur 1 formant une boucle sans fin.

Dans le premier mode de réalisation représenté figure 1, ce convoyeur 1 est un plateau en forme de couronne circulaire, rotatif dans le sens indiqué par la flèche.

Ce convoyeur 1 est entraîné en rotation de façon traditionnelle par tout moyen approprié et connu, de façon à transporter les pièces successivement en regard de chaque poste, et à les maintenir en regard de chaque poste pendant une durée prédéterminée. Le convoyeur 1 est donc divisé en tronçons d'égale longueur d'arc. chaque tronçon formant l'un des postes de la machine sur lequel est effectuée une étape du procédé selon l'invention. Dans le cas d'un convoyeur circulaire, les tronçons sont formés de secteurs angulaires identiques.

Dans l'exemple représenté figure 1, le convoyeur 1 définit sept secteurs identiques correspondant à sept postes successifs, depuis un premier poste 2 d'entrée/sortie sur lequel on place une nouvelle pièce 3 à traiter et duquel on retire une pièce 3' qui a subi l'ensemble des étapes du procédé. L'alimentation des nouvelles pièces 3 et le retrait des pièces 3' encollées peuvent être effectués manuellement ou par tout dispositif automatique approprié, par exemple un manipulateur pneumatique à bras articulé.

Immédiatement à l'aval du poste 2 d'entrée/sortie, la machine 1 comprend au moins un poste 4 de préchauffage -dans l'exemple représenté, deux postes 4 de préchauffage- de la surface poreuse 5 des pièces 3 à l'air chaud, à une température comprise entre 50 °C et 100 °C. Comme on le voit figure 2, chaque poste 4 de préchauffage peut être simplement constitué d'un ensemble de bouches 6 de soufflage d'air chaud en direction de la surface poreuse, à partir de moyens de production d'air chaud traditionnels non représentés de la machine. De façon conventionnelle, ces moyens de production d'air chaud comprennent des moyens de réglage de la température de l'air projeté par les bouches 6, notamment entre 50 °C et 100 °C.

Avantageusement et selon l'invention, on règle cette température pour qu'elle soit la plus élevée possible sans entraîner de détérioration de la pièce 3 en cours de traitement. En général, cette température sera inférieure à 100 °C. par exemple de l'ordre de 90 °C.

En tout état de cause, on a constaté par les essais effectués que lorsque cette température est supérieure à 50 °C on évite la pénétration de la colle à l'eau à l'intérieur de la surface poreuse 5 des pièces 3.

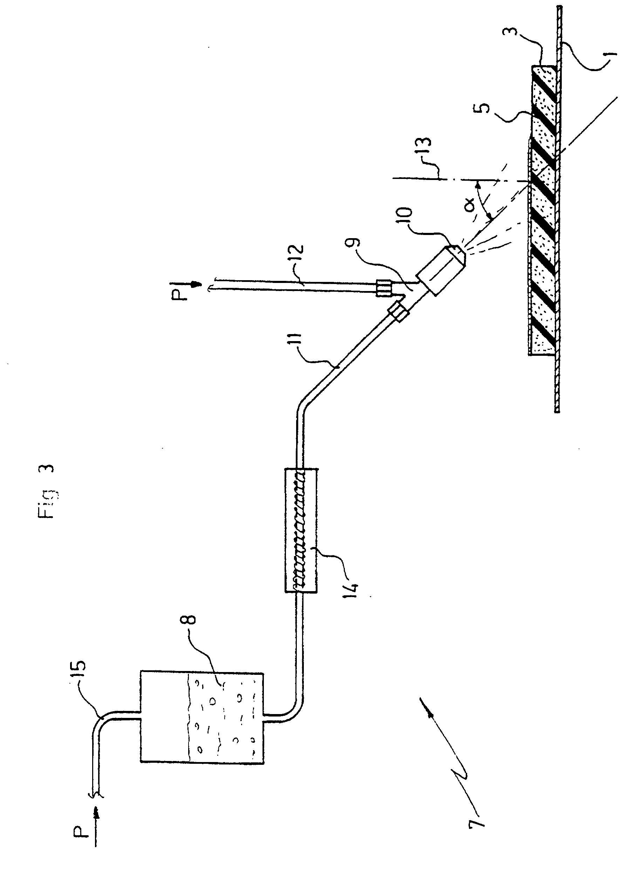

Immédiatement à l'aval du deuxième poste 4 de préchauffage, la machine comprend un poste 7 de projection de colle à l'eau par pulvérisation sous basse pression sur la surface 5 poreuse préalablement chauffée. Ce poste 7 de projection est représenté schématiquement figure 3, et comprend un réservoir 8 de colle à l'eau et un pistolet 9 de pulvérisation doté d'une buse 10 de pulvérisation de la colle. Le pistolet 9 est relié à une conduite 11 d'alimentation en colle sous pression à partir du réservoir 8 et à une conduite 12 d'alimentation en air sous pression. Le pistolet 9 est monté de façon traditionnelle sur un portique mobile permettant le déplacement du pistolet 9 en regard de toute la surface 5 à encoller. Ce portique maintient, en outre, la buse 10 à une distance constante de la surface 5 et orientée selon un angle α constant mais éventuellement réglable par rapport à la direction normale 13 à la surface 5 de la pièce 3.

Ce portique peut être formé d'un mécanisme motorisé automatique de guidage du pistolet selon deux axes horizontaux, à distance constante de la surface horizontale du convoyeur 1 recevant les pièces 3. Le pistolet 9 est monté sur ce portique par l'intermédiaire d'une fixation incorporant des moyens de réglage angulaire en rotation autour d'un axe horizontal, c'est-à-dire une liaison pivot pouvant être bloquée en toute position angulaire.

Avantageusement et selon l'invention, cet angle α est compris entre 30° et 60° et est plus particulièrement de l'ordre de 45°. En outre, la buse 10 est maintenue à une distance de la surface 5 avantageusement comprise entre 10 cm et 50 cm, plus particulièrement de l'ordre de 20 cm.

Par ailleurs, un dispositif de chauffage 14 est prévu sur la conduite 11 d'alimentation en colle, entre le réservoir 8 et le pistolet 9, de sorte que la colle à l'eau peut être préalablement chauffée, notamment à une température comprise entre 20 °C et 45 °C avant d'être alimentée dans le pistolet 9. Ce dispositif 14 de chauffage peut être formé d'une simple résistance électrique entourant une portion de la conduite 11 de colle, ou de tout autre dispositif de chauffage connu approprié, et comporte des moyens de réglage, de préférence thermostaté, de la température de chauffage.

On a constaté que ce chauffage préalable de la colle à l'eau a pour effet de diminuer les risques de bouchage de la buse 10, et concourt à éviter la pénétration de la colle et de l'eau à l'intérieur des pièces 3. On choisit néanmoins la température de façon à éviter toute précipitation ou toute prise de la colle à l'eau avant sa projection.

La colle à l'eau est alimentée sous basse pression depuis le réservoir 8 dans le pistolet 9. Cette basse pression peut résulter d'un simple écoulement par gravité de la colle à l'eau depuis le réservoir 8 qui est alors placé en position haute comme représenté figure 3 par rapport au pistolet 9 avec la conduite 11 d'alimentation qui débouche dans le fond inférieur du réservoir 8. En variante ou en combinaison, et de préférence, le réservoir 8 est également pressurisé grâce à de l'air sous basse pression P, introduit par une conduite 15 de pressurisation supérieure débouchant dans le réservoir 8 au-dessus du niveau de colle.

De même, la conduite 12 d'alimentation du pistolet 9 en air comprimé est reliée à une source d'air comprimé sous basse pression P. Avantageusement les conduites 12 et 15 sont alimentées à partir de la même source d'air comprimé (non représentée) sous basse pression, de sorte que la colle à l'eau et l'air comprimé sont fournis au pistolet 9 sous la même pression. Cette pression est par exemple comprise (en valeur relative) entre 0,2.10⁵Pa et 1.10⁵Pa, notamment de l'ordre de 0,5.10⁵Pa.

En outre, on réalise avantageusement, avant la projection, une dispersion de microbulles gazeuses dans la colle à l'eau, notamment par adjonction d'un agent effervescent dans la colle à l'eau dans le réservoir 8. Cet agent effervescent et le gaz qu'il libère, et plus généralement les microbulles gazeuses, doivent être compatibles avec la base adhésive de la colle à l'eau et ne pas altérer ses propriétés d'adhésion.

Pour réaliser cette dispersion, les microbulles gazeuses peuvent également (en variante ou en combinaison) être directement introduites au sein même de la colle à l'eau dans le réservoir 8 (soufflage direct de bulles de gaz à partir d'une rampe dotée d'une pluralité d'orifices de soufflage, électrolyse,...).

Ainsi, la colle à l'eau est projetée par pulvérisation en un nuage sous basse pression sur la surface 5 poreuse préalablement chauffée.

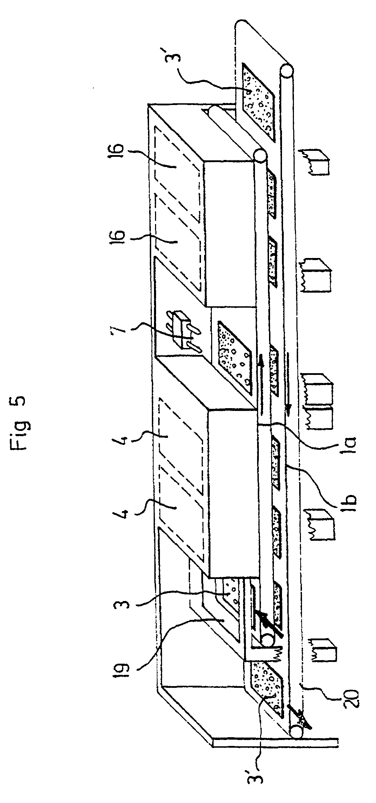

Immédiatement à l'aval du poste 7 de projection, la machine comprend un ou plusieurs postes de séchage de la colle à l'eau par chauffage radiant et/ou extraction d'air. Un exemple de poste 16 de séchage par chauffage radiant et extraction d'air est représenté schématiquement figure 4. Ce poste 16 comprend une rampe 17 radiante de chauffage par infrarouge disposée au-dessus de la surface 5 encollée et un ventilateur 18 d'extraction de l'air humide en provenance de cette surface 5 en cours de séchage. Ce poste 16 permet ainsi de sécher la colle par évaporation d'eau.

Dans l'exemple représenté figure 1, le convoyeur 1 définit trois postes 16 de séchage à l'aval du poste 7 de projection. Le dernier poste 16 de séchage est identique aux deux premiers si l'on veut utiliser les pièces 3' traitées obtenues en sortie à l'état chaud (notamment pour un assemblage immédiat avec d'autres pièces). Si au contraire les pièces 3' traitées sont destinées à ètre stockées, le dernier poste de séchage comprend uniquement un ventilateur 18 d'extraction sans dispositif 17 de chauffage.

Le convoyeur 1 est maintenu immobile pendant une durée prédéterminée T1 correspondant au temps de séjour des pièces 3 en regard de chaque poste 2, 4, 7, 16. A la fin de cette durée T1, le convoyeur 1 est entraîné en rotation angulaire d'amplitude correspondant à un secteur définissant un poste 2, 4, 7, 16. Ces opérations sont répétées périodiquement successivement de façon à permettre le transport et le maintien de chaque pièce 3 en regard de chacun des postes de la machine.

La durée T1 correspondant au temps de séjour des pièces 3 en regard de chaque poste doit permettre l'alimentation et le retrait des pièces 3, 3' sur le poste 2 d'entrée/sortie, et la projection de la colle à l'eau sur toute la surface 5 poreuse par le pistolet 9 du poste 7 de projection. Avantageusement, cette durée T1 est comprise entre 10 s et 20 s, le traitement complet des pièces se faisant en une durée totale inférieure à ou de l'ordre de 2 min. Par exemple, si cette durée T1 est de 15 s, dans le mode de réalisation de la figure 1, chaque pièce 3 est préchauffée pendant 30 s, puis séchée après projection pendant 45 s, de sorte que le traitement s'effectue en 1 min 45 s.

Il est également à noter que plusieurs pièces 3 peuvent être traitées simultanément sur chaque poste. Par exemple, on peut placer côte à côte une pièce de mousse et une housse en tissu destinées à être assemblées l'une à l'autre immédiatement à la sortie de la machine selon l'invention.

Selon la teneur en eau initiale de la colle à l'eau et la durée du séchage après projection (et donc la quantité d'eau évaporée), on obtient soit une colle thermoréactivable (pour une teneur en eau finale inférieure à 5 %), soit une colle auto-adhésive de contact (pour une teneur en eau finale de l'ordre de 20 %).

La figure 5 représente un deuxième mode de réalisation d'une machine selon l'invention dans lequel le convoyeur est formé de deux tapis transporteurs la, 1b, dont un tapis transporteur supérieur la qui défile successivement en regard d'un poste d'entrée 19, de deux postes 4 de préchauffage de la surface des pièces, d'un poste 7 de projection de colle par pulvérisation, et de deux postes 16 de séchage. Un tapis inférieur 16 s'étend axialement au-delà de l'extrémité du tapis supérieur la, de sorte que le tapis inférieur 1b recueille les pièces traitées 3' à l'aval du dernier poste 16 de séchage et les ramène par un trajet de retour à un poste de sortie 20 qui jouxte le poste d'entrée 19. Le tapis supérieur la défile donc en sens inverse du tapis inférieur 1b. Les postes d'entrée 19 et de sortie 20 étant à proximité l'un de l'autre peuvent être gérés par une seule personne. A la sortie du poste de sortie 20, les pièces 3' peuvent être stockées et empilées.

Dans ce deuxième mode de réalisation, le convoyeur définit donc un trajet linéaire (non circulaire). Il est à noter qu'il est aussi possible de prévoir un convoyeur sans retour, par exemple si les pièces 3' encollées sont directement assemblées. Dans ce cas, la machine comprend uniquement le tapis supérieur 1a.

Les essais réalisés ont pu démontrer que l'on peut projeter par pulvérisation une colle à l'eau sur des pièces en mousse ou en tissu (ou plus généralement en matière textile) sans que cette colle ne pénètre au coeur de la matière poreuse. tout effet de cartonnage étant évité. On a pu, en particulier, encoller des coussins de mousse et des housses textiles que l'on a ensuite assemblés pour former des sièges qui conservent toute leur souplesse.

### EXEMPLE:

On encolle des assises de sièges de bureau en mousse souple référence 27 M, PLASCO (FRANCE) présentant les caractéristiques suivantes :
- densité nette : 25 kg/m³,
- portance : 2,7 kPa,
- dureté d'indentation : 93 N à 25 % ; 120 N à 40 % ; 225 N à 65 %,
- élongation : 224 %,
- résilience : 57 %,
et des housses en tissu 100 % CLEVYL de 2 mm d'épaisseur et de 309 g/m² de masse surfacique.

On utilise la colle à l'eau référence GREEN GLUE de la Société CHIMISTRA (FRANCE) que l'on chauffe à 30 °C.

Les pièces sont préchauffées avec de l'air à 80 °C.

On utilise le dispositif de projection représenté figure 3 avec un réservoir 8 de 10 l de colle pressurisé à 0,5.10⁵Pa. La pression d'alimentation de l'air comprimé de pulvérisation est aussi de 0,5.10⁵Pa. L'angle α de projection est 45° et la buse de pulvérisation 10 est maintenue à 13 cm environ de la surface à coller.

Après un séchage de 1 min sous un poste de séchage 16, les pièces encollées sont parfaitement sèches et empilables ; elles ne collent pas les unes aux autres. Les assises et les housses restent parfaitement souples, la colle n'ayant pas pénétré dans l'épaisseur, et exemptes d'humidité. Elles peuvent être stockées plusieurs jours avant assemblage par réactivation à chaud de la colle à l'eau déposée en surface. On constate donc que l'invention permet d'appliquer une quantité appropriée de colle pour obtenir un collage efficace sans effet de cartonnage en une couche discontinue présentant une forme générale de filet ou de toile d'araignée.

L'invention peut faire l'objet de diverses variantes par rapport aux modes de réalisation décrits et représentés. En particulier, diverses formulations de colles à l'eau peuvent être utilisées. En outre, il est possible de prévoir plusieurs postes de projection en séries ou en parallèles, et, sur chaque poste de projection, plusieurs pistolets de pulvérisation travaillant simultanément. Egalement, le nombre de postes de préchauffage et de séchage subséquent peuvent être différents ainsi que la forme du convoyeur 1. Par ailleurs, la machine est équipée des dispositifs traditionnels de commande et de protection, notamment un carter périphérique renfermant le convoyeur 1.

## Revendications

1. Procédé d'encollage superficiel de pièces (3) souples à surface (5) poreuse telles que tissu, mousse,... avec une colle à l'eau **caractérisé en ce que** :
- on préchauffe la surface (5) à encoller de chaque pièce (3) à une température supérieure à 50 °C,
- puis on projette la colle à l'eau par pulvérisation sous basse pression sur ladite surface (5) préchauffée.

2. Procédé selon la revendication 1, **caractérisé en ce qu'**on préchauffe ladite surface (5) à une température la plus élevée possible qui n'entraîne pas de détérioration de la pièce (3).

3. Procédé selon l'une des revendications 1 et 2, **caractérisé en ce qu'**on préchauffe ladite surface (5) par projection d'air chaud à une température comprise entre 50 °C et 100 °C.

4. Procédé selon l'une des revendications 1 à 3, **caractérisé en ce qu'**on chauffe la colle à l'eau à une température comprise entre 20 °C et 45 °C avant de la projeter par pulvérisation sur ladite surface (5).

5. Procédé selon l'une des revendications 1 à 4, **caractérisé en ce qu'**on réalise une dispersion de microbulles gazeuses dans la colle à l'eau, notamment par adjonction d'un agent effervescent, avant de la projeter par pulvérisation.

6. Procédé selon l'une des revendications 1 à 5, **caractérisé en ce qu'**on projette la colle à l'eau par pulvérisation sous une pression comprise entre 0,2.10⁵ Pa et 1.10⁵Pa.

7. Procédé selon l'une des revendications 1 à 6, **caractérisé en ce qu'**on projette la colle à l'eau par pulvérisation par contact avec un jet d'air comprimé à basse pression.

8. Procédé selon la revendication 7, **caractérisé en ce qu'**on utilise un jet d'air comprimé à une pression comprise entre 0,2.10⁵Pa et 1.10⁵Pa.

9. Procédé selon l'une des revendications 1 à 8, **caractérisé en ce qu'**on projette la colle à l'eau selon une direction formant un angle (α) non nul avec la direction normale (13) à ladite surface (5).

10. Procédé selon la revendication 9, **caractérisé en ce qu'**on projette la colle à l'eau avec un angle (α) compris entre 30° et 60° -notamment de l'ordre de 45°-.

11. Procédé selon l'une des revendications 1 à 10, **caractérisé en ce qu'**on projette la colle à l'eau à l'aide d'une buse (10) de pulvérisation que l'on maintient à une distance comprise entre 5 cm et 50 cm -notamment de l'ordre de 20 cm- de ladite surface (5).

12. Procédé selon l'une des revendications 1 à 11, **caractérisé en ce qu'**on fait sécher la colle à l'eau par chauffage radiant et/ou extraction d'air immédiatement après la projection de la colle à l'eau.

13. Machine pour la mise en oeuvre d'un procédé selon l'une des revendications 1 à 12 pour l'encollage superficiel de pièces (3) souples à surface (5) poreuse telles que tissu, mousse, ... avec une colle à l'eau, **caractérisée en ce qu'**elle comprend :
- au moins un poste (7) de projection de colle à l'eau par pulvérisation sous basse pression,
- et, à l'amont de chaque poste (7) de projection, au moins un poste (4) de préchauffage en surface (5) de pièces (3) à une température supérieure à 50 °C.

14. Machine selon la revendication 13, **caractérisée en ce** le poste (7) de projection comprend des moyens (8, 9, 12, 15) de projection de la colle par pulvérisation sous une pression relative comprise entre 0.2.10⁵ Pa et 1.10⁵ Pa.

15. Machine selon la revendication 14, **caractérisée en ce qu'**elle comprend un pistolet (9) de pulvérisation relié à une conduite (11) d'alimentation en colle sous basse pression et à une conduite (12) d'alimentation en air sous basse pression.

16. Machine selon l'une des revendications 13 à 15, **caractérisée en ce qu'**elle comprend des moyens pour maintenir une buse (10) de pulvérisation de la colle orientée selon un angle (α) non nul par rapport à la direction normale (13) à la surface (5) de la pièce (3).

17. Machine selon la revendication 16, **caractérisée en ce que** l'angle (α) est compris entre 30° et 60° -notamment de l'ordre de 45°-.

18. Machine selon l'une des revendications 16 et 17,
**caractérisée en ce que** lesdits moyens sont adaptés pour maintenir l'angle (α) constant.

19. Machine selon l'une des revendications 13 à 18, **caractérisée en ce qu'**elle comprend des moyens pour maintenir une buse (10) de pulvérisation de la colle à une distance comprise entre 5 cm et 50 cm -notamment de l'ordre de 20 cm- de la surface (5) de la pièce (3).

20. Machine selon la revendication 19, **caractérisée en ce que** ladite distance est constante.

21. Machine selon l'une des revendications 13 à 20, **caractérisée en ce que** le poste (7) de projection est adapté pour projeter la colle à l'eau par pulvérisation en un nuage sous basse pression formant sur la surface (5) une couche discontinue.

22. Machine selon l'une des revendications 13 à 21, **caractérisée en ce qu'**elle comprend un convoyeur (1) adapté pour transporter successivement les pièces (3) en regard de chaque poste (2, 19, 4, 7, 16, 20), et maintenir les pièces (3) en regard de chaque poste (2, 19, 4, 7, 16, 20) pendant une durée prédéterminée, et en ce que le convoyeur (1) est adapté pour que le temps de séjour des pièces (3) en regard de chaque poste (2, 19, 4, 7, 16, 20) soit compris entre 10s et 20s.

23. Machine selon la revendication 22, **caractérisée en ce que** le convoyeur (1) est adapté pour que le traitement complet des pièces (3) se fasse en une durée totale inférieure à ou de l'ordre de 2 min.

24. Machine selon l'une des revendications 13 à 23, **caractérisée en ce que** le poste (4) de préchauffage comprend des moyens (6) de projection d'air chaud à une température comprise entre 50° C et 100° C sur la surface (5).

25. Machine selon l'une des revendications 13 à 24, **caractérisée en ce qu'**elle comprend des moyens (14) de chauffage de la colle à l'eau à une température comprise entre 20° C et 45° C avant son alimentation au poste (7) de projection.

26. Machine selon la revendication 25, **caractérisée en ce que** les moyens (14) de chauffage comprennent un dispositif(14) de chauffage associé à une conduite (11) d'alimentation en colle d'un pistolet (9) de projection.

27. Machine selon l'une des revendications 13 à 26, **caractérisée en ce qu'**elle comprend un poste (2, 19) d'entrée recevant les pièces (3) à traiter et un poste (2, 20) de sortie auquel les pièces (3') arrivent après traitement, et en ce que le poste (2, 19) d'entrée et le poste (2, 20) de sortie se jouxtent ou sont confondus en un même poste (2) d'entrée/sortie, de façon à pouvoir être gérés par un seul et même manipulateur automatique ou humain.

## Patentansprüche

1. Verfahren zur Oberflächenleimung von.flexiblen Werkstücken (3) mit poröser Oberfläche (5) wie Gewebe, Schaumstoff, ... mit einem wässrigen Leim, **dadurch gekennzeichnet, dass**:
- die zu leimende Oberfläche (5) jedes Werkstücks (3) bei einer Temperatur von mehr als 50°C vorerhitzt wird,
- danach der wässrige Leim durch Zerstäuben unter niedrigem Druck auf die genannte vorerhitzte Oberfläche (5) gesprüht wird.

2. Verfahren nach Anspruch 1, **dadurch gekennzeichnet, dass** die genannte Oberfläche (5) auf die höchstmögliche Temperatur vorerhitzt wird, die keine Verschlechterung des Werkstücks (3) zur Folge hat.

3. Verfahren nach einem der Ansprüche 1 und 2, **dadurch gekennzeichnet, dass** die genannte Oberfläche (5) durch Aufblasen von Heißluft mit einer Temperatur zwischen 50°C und 100°C vorerhitzt wird.

4. Verfahren nach einem der Ansprüche 1 bis 3, **dadurch gekennzeichnet, dass** der wässrige Leim auf eine Temperatur zwischen 20°C und 45°C erhitzt wird, bevor er durch Zerstäubung auf die genannte Oberfläche (5) gesprüht wird.

5. Verfahren nach einem der Ansprüche 1 bis 4, **dadurch gekennzeichnet**; dass vor dem Aufsprühen durch Zerstäubung 'gasförmige Mikrobläschen in dem wässrigen Leim dispergiert werden, insbesondere durch Zugeben eines Schäumungsmittels

6. Verfahren nach einem der Ansprüche 1 bis 5, **dadurch gekennzeichnet, dass** der wässrige Leim durch Zerstäubung unter einem Druck zwischen 0,2 x 10⁵ Pa und 1 x 10⁵ Pa aufgesprüht wird.

7. Verfahren nach einem der Ansprüche 1 bis 6, **dadurch gekennzeichnet, dass** der wässrige Leim durch Zerstäubung durch Kontakt mit einem unter niedrigem Druck stehenden Luftstrahl aufgesprüht wird.

8. Verfahren nach Anspruch 7, **dadurch gekennzeichnet, dass** ein Luftstrahl mit einem Druck zwischen 0,2 x 10⁵ Pa und 1 x 10⁵ Pa verwendet wird.

9. Verfahren nach einem der Ansprüche 1 bis 8, **dadurch gekennzeichnet, dass** der wässrige Leim in einer Richtung aufgesprüht wird, die einen Winkel (α) zur Normalen (13) zu der genannten Oberfläche (5) bildet, der nicht null ist.

10. Verfahren nach Anspruch 9, **dadurch gekennzeichnet, dass** der wässrige Leim in einem Winkel (α) von 30° bis 60°, inbesondere von etwa 45° aufgesprüht wird.

11. Verfahren nach einem der Ansprüche 1 bis 10, **dadurch gekennzeichnet, dass** der wässrige Leim mit Hilfe einer Zerstäubungssprühdüse (10) aufgesprüht wird, wobei ein Abstand von 5 bis 50 cm, inbesondere von etwa 20 cm, von der genannten Oberfläche (5) gehalten wird.

12. Verfahren nach einem der Ansprüche 1 bis 11, **dadurch gekennzeichnet, dass** der wässrige Leim mit einer Strahlungsheizung und/oder durch Luftabzug unmittelbar nach dem Aufsprühen des wässrigen Leims getrocknet wird.

13. Anlage zur Ausführung eines Verfahrens nach einem der Ansprüche 1 bis 12 zur Oberflächenleimung von flexiblen Werkstücken (3) mit poröser Oberfläche (5) wie Gewebe, Schaumstoff, ... mit einem wässrigen Leim, **dadurch gekennzeichnet, dass** sie folgendes umfasst:
- wenigstens eine Sprühstation (7) zum Aufsprühen von wässrigem Leim durch Zerstäubung unter niedrigem Druck,
- und oberhalb jeder Sprühstation (7) wenigstens eine Station (4) zum Vorheizen der Oberfläche (5) von Werkstücken (3) mit einer Temperatur von mehr als 50°C.

14. Anlage nach Anspruch 13, **dadurch gekennzeichnet, dass** die Sprühstation (7) Mittel (8, 9, 12, 15) zum Aufsprühen des Leims durch Zerstäubung unter einem relativen Druck zwischen 0,2 x 10⁵ Pa und 1 x 10⁵ Pa umfasst.

15. Anlage nach Anspruch 14, **dadurch gekennzeichnet, dass** sie eine Zerstäubungspistole (9) in Verbindung mit einer Leitung (11) zum Zuführen von Leim unter niedrigem Druck und einer Leitung (12) zum Zuführen von Luft unter niedrigem Druck aufweist.

16. Anlage nach einem der Ansprüche 13 bis 15, **dadurch gekennzeichnet, dass** sie Mittel aufweist, um eine Leimzerstäubungsdüse (10) in einem Winkel (α) zur Normalen (13) zu der Oberfläche (5) des Werkstückes (3) bildet, der nicht null ist.

17. Anlage nach Anspruch 16, **dadurch gekennzeichnet, dass** der Winkel (α) 30° bis 60°, insbesondere etwa 45° beträgt.

18. Anlage nach einem der Ansprüche 16 und 17, **dadurch gekennzeichnet, dass** die genannten Mittel die Aufgabe haben, den Winkel (α) konstant zu halten.

19. Anlage nach einem der Ansprüche 13 bis 18, **dadurch gekennzeichnet, dass** sie Mittel aufweist, um eine Leimzerstäubungsdüse (10) in einem Abstand von 5 cm bis 50 cm, insbesondere von etwa 20 cm, von der Oberfläche (5) des Werkstückes (3) zu halten.

20. Anlage nach Anspruch 19, **dadurch gekennzeichnet, dass** der genannte Abstand konstant ist.

21. Anlage nach einem der Ansprüche 13 bis 20, **dadurch gekennzeichnet, dass** die Sprühstation (7) die Aufgabe hat, den wässrigen Leim durch Zerstäubung und als Sprühnebel unter niedrigem Druck so aufzusprühen, dass auf der Oberfläche (5) eine diskontinuierliche Schicht entsteht.

22. Anlage nach einem der Ansprüche 13 bis 21, **dadurch gekennzeichnet, dass** sie einen Förderer (1) aufweist, der die Aufgabe hat, die Werkstücke (3) nacheinander zu jeder Station (2, 19, 4, 7, 16, 20) zu transportieren und die Werkstücke (3) für eine vorbestimmte Dauer an jeder Station (2, 19, 4, 7, 16, 20) zu halten, und dadurch, dass der Förderer (1) so gestaltet ist, dass die Aufenthaltszeit der Werkstücke (3) an jeder Station (2, 19, 4, 7, 16, 20) zwischen 10 und 20 Sekunden beträgt.

23. Anlage nach Anspruch 22, **dadurch gekennzeichnet, dass** der Förderer (1) so gestaltet ist, dass die komplette Behandlung der Werkstücke (3) eine Gesamtzeit von weniger als etwa 2 Minuten in Anspruch nimmt.

24. Anlage nach einem der Ansprüche 13 bis 23, **dadurch gekennzeichnet, dass** die Vorheizstation (4) Mittel (6) zum Sprühen von Heißluft mit einer Temperatur zwischen 50°C und 100°C auf die Oberfläche (5) umfasst.

25. Anlage nach einem der Ansprüche 13 bis 24, **dadurch gekennzeichnet, dass** sie Mittel (14) zum Heizen des wässrigen Leims auf eine Temperatur zwischen 20°C und 45°C vor dem Zuführen zur Aufsprühstation (7) umfasst.

26. Anlage nach Anspruch 25, **dadurch gekennzeichnet, dass** die Heizmittel (14) eine Heizvorrichtung (14) in Verbindung mit einer Leitung (11) zum Zuführen von Leim aus einer Sprühpistole (9) aufweisen.

27. Anlage nach einem der Ansprüche 13 bis 26, **dadurch gekennzeichnet, dass** sie eine Eintrittsstation (2, 19) zur Aufnahme von zu behandelnden Werkstücken (3) und eine Austrittsstation (2, 20) umfasst, an der die Werkstücke (3') nach der Behandlung ankommen, und dadurch, dass die Eintrittsstation (2, 19) und die Austrittsstation (2, 20) entweder nebeneinander liegen oder zu einer einzigen Ein/Austrittsstation (2) kombiniert sind, so dass sie durch dieselbe eine automatische Steuerung oder Person gesteuert werden kann.

## Claims

1. A process for surface sizing flexible parts (3) having a porous surface (5), such as fabric; foam etc, with a water-based adhesive, wherein:
- the surface (5) to be sized of each part (3) is preheated to a temperature above 50°C,
- the adhesive is then sprayed by atomization under low pressure onto the said preheated surface (5).

2. The process as claimed in claim 1, wherein the said surface (5) is preheated to the highest possible temperature that will not cause damage to the part (3).

3. The-process as claimed in one of claims 1 and 2, wherein the said surface (5) is preheated by blowing hot air at a temperature between 50°C and 100°C.

4. The process as claimed in one of claims 1 to 3, wherein the water-based adhesive is warmed to a temperature of between 20°C and 45°C before it is sprayed by atomization onto the said surface (5).

5. The process as claimed in one of claims 1 to 4, wherein gas microbubbles are dispersed in the water-based adhesive, in particular by adding an effervescent agent, before it is sprayed by atomization.

6. The process as claimed in one of claims 1 to 5, wherein the water-based adhesive is sprayed by atomization under a pressure of between 0.2 × 10⁵ Pa and 1 × 10⁵ Pa.

7. The method as claimed in one of claims 1 to 6, wherein the water-based adhesive is sprayed by atomization using contact with an air jet compressed to a low pressure .

8. The process as claimed in claim 7, wherein a jet of air is used compressed to a pressure of between 0.2 x 10⁵ Pa and 1 x 10⁵ Pa.

9. The process as claimed in one of claims 1 to 8, wherein the water-based adhesive is sprayed in a direction forming a non-zero angle (α) with the direction (13) normal to the said surface (5).

10. The process as claimed in claim 9, wherein the water-based adhesive is sprayed at an angle (α) of between 30° and 60°, in particular of the order of 45°.

11. The process as claimed in one of claims 1 to 10, wherein the water-based adhesive is sprayed with the aid of an atomizing nozzle (10) which is held at a distance of between 5 cm and 50 cm, in particular of the order of 20 cm, from the said surface (5).

12. The process as claimed in one of claims 1 to 11, wherein the water-based adhesive is dried by radiant heating and/or by air extraction immediately after spraying the water-based adhesive.

13. A machine for implementing a process as claimed in one of claims 1 to 12 for surface sizing flexible parts (3) with a porous surface (5) such as fabric, foam etc, with a water-based adhesive, wherein it comprises:
- at least one unit (7) for spraying the water-based adhesive by atomization under low pressure,
- and, upstream from each spray unit (7), at least one unit (4) for preheating the surface (5) of the parts (3) to a temperature above 50°C.

14. The machine as claimed in claim 13, wherein the spray unit (7) includes means (8, 9, 12, 15) for spraying adhesive by atomization under a relative pressure of between 0.2 × 10⁵ Pa and 1 × 10⁵ Pa.

15. The machine as claimed in claim 14, wherein it includes a spray gun (9) connected to a pipe (11) for supplying adhesive under low pressure and a pipe (12) for supplying air under low pressure.

16. The machine as claimed in one of claims 13 to 15, wherein it includes means for holding a nozzle (10) for spraying adhesive, directed at a non-zero angle (α) with respect to the direction (13) normal to the surface (5) of the part (3).

17. The machine as claimed in claim 16, wherein the angle (α) lies between 30° and 60°, in particular of the order of 45°.

18. The machine as claimed in one of claims 16 and 17, wherein the said means are adapted so as to keep the angle (α) constant.

19. The machine as claimed in one of claims 13 to 18, wherein it includes means for holding a nozzle (10) for. atomizing adhesive at a distance of between 5 cm and 50 cm, in particular of the order of 20 cm, from the surface (5) of the part (3).

20. The machine as claimed in claim 19, wherein the said distance is constant.

21. The machine as claimed in one of claims 13 to 20, wherein the spray unit (7) is adapted so as to spray the water-based adhesive by atomization in a cloud under low pressure forming a discontinuous layer on the surface (5).

22. The machine as claimed in one of claims 13 to 21, wherein it includes a conveyor (1) adapted so as to convey the parts (3) successively opposite each unit (2, 19, 4, 7, 16, 20) and to hold the parts (3) opposite each unit (2, 19, 4, 7, 16, 20) for a predetermined period and wherein the conveyor (1) is adapted so that the dwell time of the parts (3) opposite each unit (2, 19, 4, 7, 16, 20) lies between 10 s and 20 s.

23. The machine as claimed in claim 22, wherein the conveyor (1) is adapted so that the complete treatment of the parts (3) is made within a total period less than or of the order of 2 min.

24. The machine as claimed in one of claims 13 to 23, wherein the preheating unit (4) includes means (6) for blowing hot air at a temperature of between 50°C and 100°C onto the surface (5).

25. The machine as claimed in one of claims 13 to 24, wherein it includes means (14) for warming the water-based adhesive to a temperature of between 20°C and 45°C before it is supplied to the spray unit (7).

26. The machine as claimed in claim 25, wherein the means of heating (14) comprise a heating device (14) associated with a pipe (11) for supplying adhesive to a spray gun (9).

27. The machine as claimed in one of claims 13 to 26, wherein it includes an input unit (2, 19) receiving the parts (3) to be treated and an output unit (2, 20) at which the parts (3') arrive after treatment, and in that the input unit (2, 19) and the output unit (2, 20) adjoin each other or are one and the same input/output unit (2), so that they can be controlled by one and the same automatic or human manipulator.
